# EUROPEAN PATENT APPLICATION

(11) **EP 2 615 248 A2**
(43) Date of publication of application: **17.07.2013**
(21) Application number: 12191895.7
(22) Date of filing: 08.11.2012
(51) Int. Cl.: F01D 5/28

(54) **Fiber composite assembly and process of fabricating a fiber composite assembly**

(30) Priority: 12.01.2012 US 201213348741
(71) Applicant: General Electric Company, Schenectady, New York 12345 (US)
(72) Inventor: Roberts lll, Herbert Chidsey, Greenville, SC South Carolina 29615 (US)
(74) Representative: Szary, Anne Catherine

(57) **Abstract**

A fiber composite assembly (806) and a process of fabricating a fiber composite assembly (806) are disclosed. The fiber composite assembly (806) includes a first composite layer (804a) having a first fiber (110) and a second composite layer (804b) having a second layer. The first fiber (110) includes a helical portion (106) and the second fiber extends to within the helical portion (106) of the first fiber. A process of fabricating a fiber composite assembly includes elongating a wound fiber preform to form a helical fiber or positioning the first fiber in the first composite layer and positioning the second fiber in the second composite layer.

## Description

### FIELD OF THE INVENTION

The present invention is directed to manufacturing processes and manufactured products. More specifically, the present invention is directed to fiber composite assemblies and processes of fabricating fiber composite assemblies.

### BACKGROUND OF THE INVENTION

Composite assemblies are consistently being subjected to more difficult environments. For example, composite assemblies form products that are subjected to large temperature ranges, high stress, and other physical challenges. As such, there is a constant need to augment the physical properties of such composite assemblies to permit use in a greater range of environments.

Specifically, it is desirable to improve load carrying capacity for composite assemblies. Composite assemblies made from laminate ply stacks have structural weaknesses in interlaminar and in-plane fiber directions. The shear loading in these directions is highly dependent on a matrix's strength that is used for forming the composite assembly.

Use of specific matrix materials permits some improvement in composite assemblies. However, such matrix materials can be expensive, can be unavailable, and/or can be incompatible with certain environments. Additionally or alternatively, specific fibers or fibers in conjunction with other materials, such as wires, can also be used. For example, a known composite flywheel rim includes a spiraled composite assembly having fibers incorporated therein. The fibers are arranged in a lattice forming the spiraled composite but are not spiraled themselves and, thus, do not include the physical properties provided by spiraled fibers.

Another known composite includes fiber reinforced composite resin. The resin includes multiple plies, each having a plurality of elongate fibers. However, the elongate fibers are not spiraled fibers and, thus, do not include the physical properties provided by spiraled fibers. Spiraled fibers include a planar geometric arrangement of the fiber swirling into a central portion. Known spiraled fiber systems also suffer from drawbacks. Known spiraled fiber systems can require use of large amounts of fibrous materials to form a spiraled multilayer fiber.

A fiber composite assembly and a process of fabricating a fiber composite assembly that do not suffer from the above drawbacks would be desirable in the art.

### BRIEF DESCRIPTION OF THE INVENTION

In an exemplary embodiment, a process of fabricating a fiber composite assembly includes providing a wound fiber preform and elongating the wound fiber preform to form a helical fiber.

In another exemplary embodiment, a process of fabricating a fiber composite assembly includes positioning a first fiber in a first composite layer and positioning a second fiber in a second composite layer. The first fiber includes a helical portion and the second fiber extends to within the helical portion of the first fiber.

In another exemplary embodiment, a fiber composite assembly includes a first composite layer having a first fiber and a second composite layer having a second layer. The first fiber includes a helical portion and the second fiber extends to within the helical portion of the first fiber.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

FIG. 1 shows a schematic view of a process of forming an elongate helical fiber according to an embodiment of the disclosure.
FIG. 2 shows a perspective view of a helical fiber having a square-helix geometry according to the disclosure.
FIG. 3 shows a perspective view of a helical fiber having a triangular-helix geometry according to the disclosure.
FIG. 4 shows a perspective view of a helical fiber having a pentagonal-helix geometry according to the disclosure.
FIG. 5 shows a perspective view of a helical fiber having a hexagonal-helix geometry according to the disclosure.
FIG. 6 shows a perspective view of a helical fiber having a heptagonal-helix geometry according to the disclosure.
FIG. 7 shows a perspective view of a helical fiber having an octagonal-helix geometry according to the disclosure.
FIG. 8 shows a schematic view of an exemplary process of forming a fiber composite assembly according to the disclosure.
FIG. 9 shows a schematic view of an exemplary process of forming a fiber composite assembly according to the disclosure.
FIG. 10 shows a perspective view of a helical fiber according to the disclosure.

Wherever possible, the same reference numbers will be used throughout the drawings to represent the same parts.

### DETAILED DESCRIPTION OF THE INVENTION

Provided is a fiber composite assembly and a process of fabricating a fiber composite assembly. Embodiments of the present disclosure permit use of fiber composite assemblies in a greater range of environments than other known assemblies, in harsher (hotter, colder, higher stress, or combinations thereof) environments than other known assemblies, permit increased structural integrity (for example, where known assemblies have weaknesses, such as, in interlaminar and in-plane fiber directions), decrease dependence on matrix properties in providing desired properties for fiber composite assemblies, permit formation of fibers having properties and/or compositions not previously available, and combinations thereof.

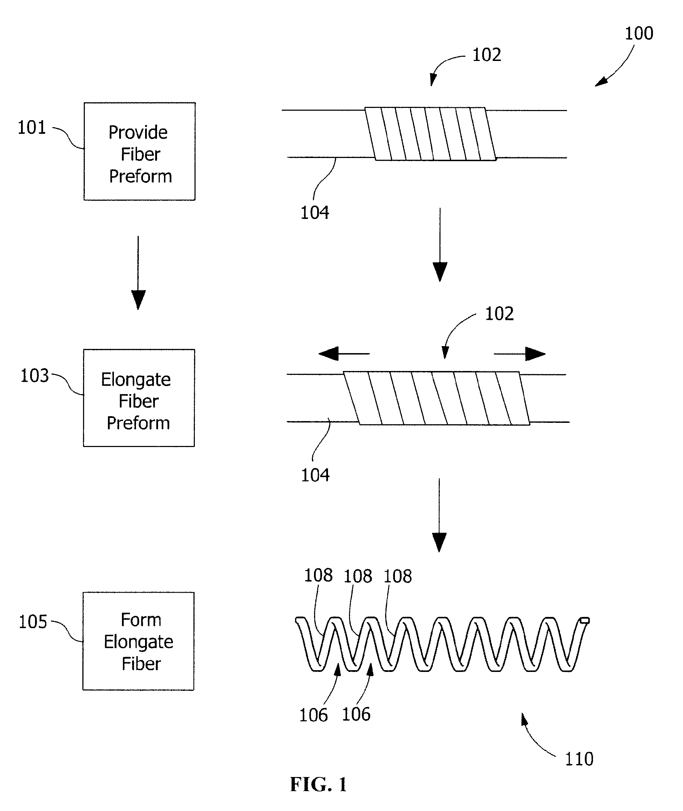

FIG. 1 shows a process 100 according to the disclosure. The process 100 includes providing a fiber preform 102 (step 101) that is formed by any suitable process. The fiber preform 102 is a wound fiber preform having a helical geometry. In one embodiment, the fiber preform 100 is positioned on an elongate member 104. The elongate member 104 includes a geometry corresponding to the fiber preform 102, for example, cylindrical, oval cylindrical, square, rectangular, triangular, pentagonal, hexagonal, heptagonal, octagonal, or any other suitable simple or complex geometry.

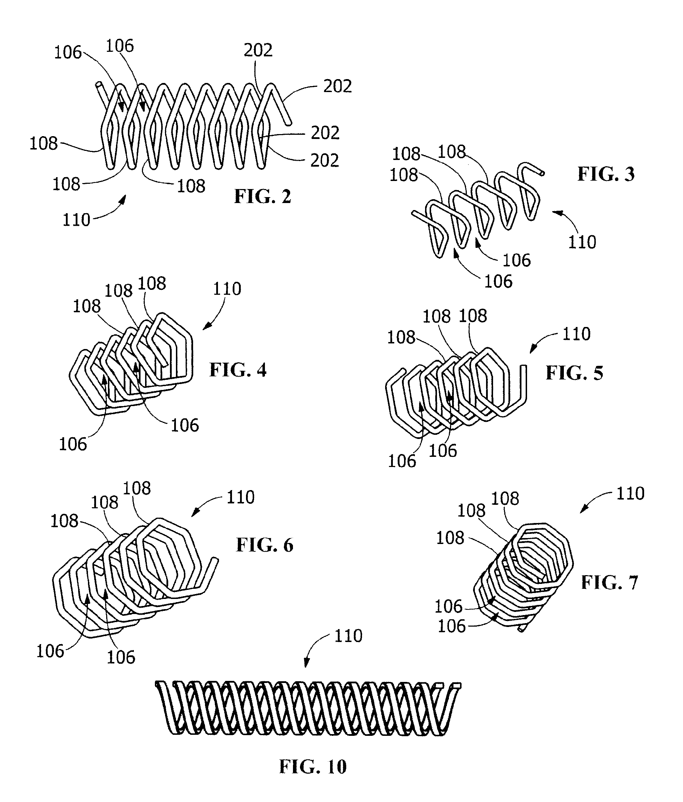

In the process 100, the fiber preform 102 is elongated (step 103). By elongating the fiber preform 102 (step 103), open regions 106 are formed between fiber regions 108 (such as helical portions). In one embodiment, the elongating (step 103) is achieved by providing a force, such as by pulling a portion or the end of the fiber preform 102 in one or both directions along the elongate member 104. In one embodiment, the fiber preform 102 is coated with a curing agent to temporarily fix the fiber in a helical orientation and to provide support of the fiber preform 102 during subsequent alignment and/or positioning. Upon being elongated (step 103) to a predetermined distance, the fiber preform 102 is transformed and a helical fiber 110 is formed (step 105). As shown in FIG. 1, in one embodiment, the helical fiber 110 is or includes a circular-helix geometry. In other embodiments, the helical fiber 110 is or includes a square helix geometry (see FIG. 2), a triangular-helix geometry (see FIG. 3), a pentagonal-helix geometry (see FIG. 4), a hexagonal-helix geometry (see FIG. 5), a heptagonal-helix geometry (see FIG. 6), an octagonal-helix geometry (see FIG. 7), any other suitable geometry, or any suitable combinations thereof (for example, when formed with the elongate member 104 having portions with different geometries corresponding to more than one of the geometries). As shown in FIG. 10, in one embodiment, the helical fiber 110 is a double-helix formed, for example, by winding a first helical fiber 110 into a second helical fiber 110.

In one embodiment, the helical fiber 110 includes a simple geometry, for example, a pure circular-helix geometry and/or a geometry having substantially equal sides 202 (see FIG. 2), such as, a pure square-helix geometry, a pure triangular-helix geometry, a pure pentagonal-helix geometry, a pure hexagonal-helix geometry, a pure heptagonal-helix geometry, a pure octagonal-helix geometry, any other suitable pure geometry, or any suitable combination thereof. Additionally or alternatively, on one embodiment, the helical fiber 110 includes one or more sides or portions that are not equal and, thus, a complex geometry. In a further embodiment, the helical fiber 110 spirals inward, for example, when formed with the elongate member 104 having a wider portion at one end and a narrower portion at the other end).

The material of the helical fiber 110 is any suitable material. In one embodiment, the helical fiber 110 is a braided fiber including one or more portions that are braided. In one embodiment, the helical fiber 110 is a monofiber, for example, a fiber having a single material and/or single layer of the single material. In one embodiment, the helical fiber 110 is a multilayered fiber, for example, having multiple layers of the same material or layers of differing materials. In one embodiment, the helical fiber 110 includes silicon carbide monofilaments, ceramic fibers, carbon fibers, polypropylene filaments, or a combination thereof.

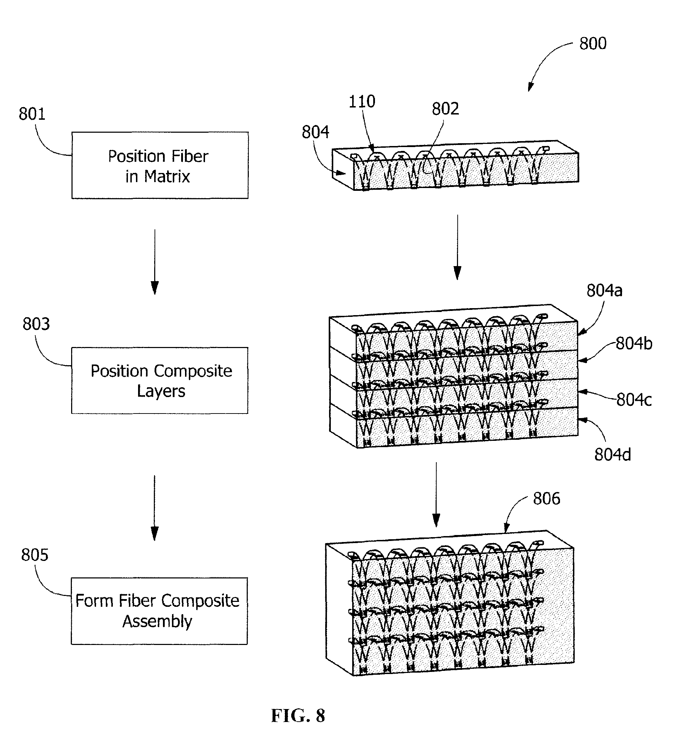

FIG. 8 shows an embodiment of a process 800 according to the disclosure. The process 800 shown in FIG. 8 is separate from the process 100 shown in FIG. 1 or a continuation of the process shown in FIG. 1. The process 800 shown in FIG. 8 includes positioning one or more of the helical fibers 110 in a matrix 802 (step 801). In one embodiment, the matrix 802 is selected from the group consisting of ceramic materials, organic materials, metals, and metallic alloys. The matrix 802 and the helical fiber(s) 110 are arranged as a composite layer 804. In one embodiment, the helical fibers 110 permit interlacing in vertical and/or horizontal directions. Arranging the helical fibers 110 in an interlaced orientation within the composite layer 804 provides a load path that is capable of carrying inter-laminar loading between the composite layer 804 and additional layers. In one embodiment, the positioning of the helical fibers 110 increases interlaminar tensile strength and interlaminar shear strength and/or provides a greater amount of interlaminar tensile strength and interlaminar shear strength than a non-helical fiber (not shown) would provide.

The process 800 continues with a plurality of the composite layer 804 being positioned (step 803). For example, in one embodiment, a first composite layer 804a is positioned on a second composite layer 804b. In further embodiments, additional composite layers 804, for example, a third composite layer 804c and a fourth composite layer 804d are similarly positioned. Any suitable number of composite layers 804 are positioned according to the process 800. Suitable amounts of the composite layers 804 include, but are not limited to, two of the composite layers 804, three of the composite layers 804, four of the composite layers 804, five of the composite layers 804, six of the composite layers 804, ten of the composite layers 804, fifteen of the composite layers 804, or more. In one embodiment, the positioned composite layers 804 include the fiber regions 108 of one or more of the helical fibers 110 in one of the composite layers 804 extending into open regions 106 of one or more of the helical fibers 110 in another of the composite layers 804.

After two or more of the composite layers 804 are positioned, a fiber composite assembly 806 is formed (step 805). In one embodiment, the forming (step 805) of the fiber composite assembly 806 includes heating, pressing, and/or otherwise curing the matrix 802 of one or more of the composite layers 804. The forming (step 805) of the matrix 802 into the fiber composite assembly 806 is partially accomplished prior to the positioning of the composite layer 804 (step 803), completely accomplished prior to the positioning of the composite layer 804 (step 803), partially accomplished during the positioning of the composite layer (step 803), completely accomplished during the positioning of the composite layer (step 803), partially accomplished after the positioning of the composite layer (step 803), completely accomplished after the positioning of the composite layer (step 803), or a combination thereof.

As shown in FIG. 8, in one embodiment, the positioning of the composite layers 804 (step 803) includes orienting each of the composite layers 804 such that the helical fibers 110 in each of the composite layers 804 are oriented in the same direction. In this embodiment, the fiber composite assembly 806 formed from the composite layers 804 has increased interlayer adhesion attributable to the helical fibers 110. In addition, the fiber composite assembly 806 includes some flexibility in comparison to having the helical fibers 110 arranged in more than one direction.

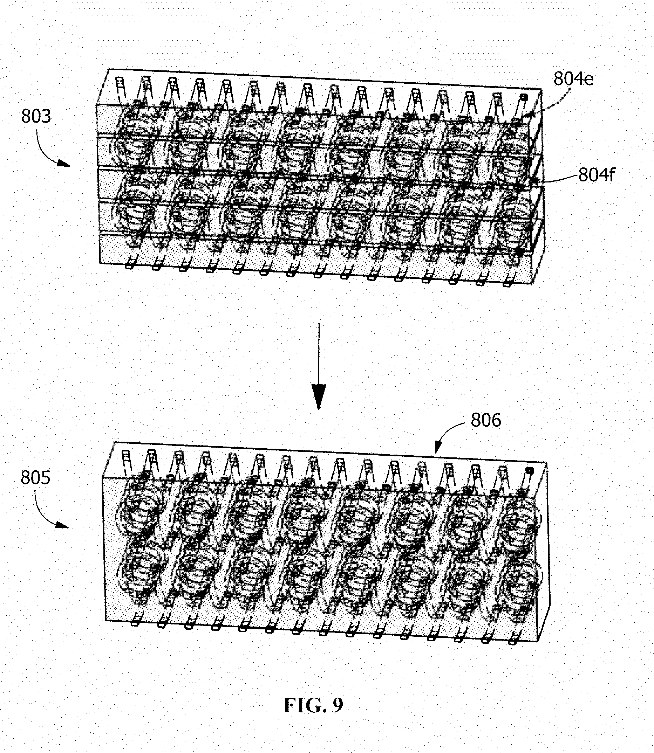

As shown in FIG. 9, in one embodiment, the positioning of the composite layers 804 (step 803) includes orienting one or more of the composite layers 804 such that the helical fibers 110 are oriented at a plurality of directions, for example, the helical fibers 110 in a first composite layer 804e being perpendicular or generally perpendicular to the helical fibers 110 in a second composite layer 804f. In this embodiment, the fiber composite assembly 806 formed from the composite layers 804 has increased interlayer adhesion attributable to the helical fibers 110 and is more rigid than the fiber composite assembly 806 formed with the helical fibers 110 in each of the composite layers 804 being oriented in the same direction.

For example, the orienting of the composite layers 804 in the embodiments shown in FIGS. 8 and 9 can be used for forming the fiber composite assembly 806 with increased interlaminar properties. In one embodiment, unidirectional loading of a desired use for the composite assembly 806 is in-line or substantially in-line with the orientation of the helical fiber 110. Such uses include the fiber composite assembly 806 forming a portion or all of a gas turbine airfoil, a marine or aviation based composite structural body, athletic equipment, or other suitable applications benefiting from the advantages described herein. Additionally or alternatively, in one embodiment, tangential loadings, or secondary loadings of a desired use for the composite assembly 806 are in-line or substantially in-line with portions of the helical fiber 110 (such as the helical portions of the fiber region 108), thereby distributing a portion of such loads between composite layers 804.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A process of fabricating a fiber composite assembly, the process comprising:
positioning a first fiber in a first composite layer; and
positioning a second fiber in a second composite layer;
wherein the first fiber includes a helical portion and the second fiber extends to within the helical portion of the first fiber.

2. The process of claim 1, further comprising elongating a wound fiber preform to form the first fiber.

3. The process of claim 1 or claim 2, wherein the first composite layer is a ceramic composite layer, an organic composite layer or a metal composite layer.

4. The process of any preceding claim, wherein the second fiber is helical.

5. The process of any preceding claim, wherein the first fiber is a square-helix, a round-helix, or a complex helix selected from the group consisting of an oval-helix, a triangular-helix, a pentagonal-helix, hexagonal-helix, heptagonal-helix, an octagonal-helix, and combinations thereof.

6. The process of any preceding claim, wherein the first fiber is a triangle-helix.

7. The process of any preceding claim, wherein the first fiber is a braided fiber, a mono-fiber or a multilayered fiber.

8. The process of any preceding claim, wherein the first fiber is a silicon carbide monofilament, ceramic fiber, carbon fiber, or a polypropylene filament.

9. A fiber composite assembly, comprising:
a first composite layer having a first fiber; and
a second composite layer having a second layer;
wherein the first fiber includes a helical portion and the second fiber extends to within the helical portion of the first fiber.

10. The assembly of claim 9, wherein the first composite layer is a ceramic composite layer.

11. The assembly of claim 9, wherein the first composite layer is an organic composite layer.

12. The assembly of claim 9, wherein the first composite layer is a metal composite layer.

13. The assembly of claim 9, wherein the first fiber is a silicon carbide monofilament, ceramic fiber, carbon fiber, or a polypropylene filament.

14. A process of fabricating a fiber composite assembly, the process comprising:
providing a wound fiber preform; and
elongating the wound fiber preform to form a helical fiber.
